# EUROPÄISCHE PATENTSCHRIFT

(11) **EP 1 396 969 B1**
(45) Veröffentlichungstag und Bekanntmachung des Hinweises auf die Patenterteilung: **10.10.2012**
(21) Anmeldenummer: 03102611.5
(22) Anmeldetag: 20.08.2003
(51) Int. Cl.: H04L 12/66, H04N 1/00

(54) **Verfahren zur Einrichtung einer Faxverbindung über ein paket-orientiertes Netzwerk**
Method for establishing a facsimile connection over a packet-oriented network
Procédé pour l'établissement d'une connection facsimilé via un réseau à commutation par paquet

(30) Priorität: 09.09.2002 DE 10241707
(43) Veröffentlichungstag der Anmeldung: 10.03.2004
(73) Patentinhaber: Siemens Enterprise Communications GmbH & Co. KG, 81379 München (DE)
(72) Erfinder: Holger Hoffmann, 58239 Schwerte (DE)
(74) Vertreter: Fritzsche, Thomas

(56) Entgegenhaltungen:
- EP-A- 1 185 072
- US-A1- 2001 030 760
- CHOUDHARY U ET AL: "Using T.38 and SIP for real-time fax transmission over IP networks" PROCEEDINGS LCN 2001. 26TH ANNUAL IEEE CONFERENCE ON LOCAL COMPUTER NETWORKS, PROCEEDINGS LCN 2001. 26TH ANNUAL IEEE CONFERENCE ON LOCAL COMPUTER NETWORKS, TAMPA, FL, USA, 14-16 NOV. 2001, Seiten 74-81, XP002260712 2001, Los Alamitos, CA, USA, IEEE Comput. Soc, USA ISBN: 0-7695-1321-2
- CAPI ASSOCIATION E.V.: "Common-ISDN-Api, Version 2.0, " , CAPI ASSOCIATION E.V. XP002260713 * Seite 34 - Seite 40 *

## Beschreibung

Die Erfindung betrifft ein Verfahren zur Einrichtung einer Faxverbindung über ein paketorientiertes Netzwerk.

Moderne Kommunikationssysteme basieren zunehmend auf paketorientierten Kommunikationsverbindungen in Erweiterung oder als Ersatz zu gängigen verbindungs- oder zeitschlitzorientierten Kommunikationsverbindungen.

Mit einem zunehmenden Ausbau paketorientierter Netzwerke, wie beispielsweise dem Internet oder räumlich begrenzter Netzwerke - in der Fachwelt oftmals als 'Local Area Network (LAN)' bezeichnet - ist in vielen Fällen eine - im Vergleich mit einem verbindungsorientierten Kommunikationsnetzwerk - wirtschaftlichere Variante einer Telekommunikationsinfrastruktur möglich. Kommunikationsnetzwerke auf Basis einer paketorientierten Technik - in der Fachwelt oftmals als 'Voice over IP, VoIP' bezeichnet - bauen in vielen Fällen auf dem in der Fachwelt bekannten Protokollen für eine Datenkommunikation über das Internet auf, insbesondere dem sogenannten 'Internet Protocol', abkürzend 'IP'. Für die VoIP-Kommunikation ist dabei der ITU-T-Standard (International Telecommunication Union - Telecommunications Standardization Sector) H.323 bzw. das von der Arbeitsgruppe IETF (Internet Engineering Task Force) entwickelte Protokoll SIP (Session Initiation Protocol) weit verbreitet.

In Kommunikationsnetzwerken mit einer paketorientierten Technik wird im Gegensatz zur zeitschlitzorientierten Technik die Vermittlung von Kommunikationspartnern nicht durch eine zentrale Kommunikationseinrichtung verwaltet. Statt dessen wird die Kommunikationsverbindung durch ein wechselseitiges Senden und Empfangen von - Nutz- und Signalisierungsinformationen enthaltenden - Datenpaketen zwischen den beiden Kommunikationspartnern aufrechterhalten, wobei die einzelnen Datenpakete u.a. Informationen über die Zieladresse des jeweils anderen Kommunikationspartners beinhalten.

Einige Kommunikationssysteme unterstützen sowohl die zeitschlitzorientierte als auch die paketorientierte Technik, um eine Anbindung sowohl klassischer Kommunikationsendgeräte als auch von VoIP-Kommunikationsendgeräte über ein paketorientiertes Netzwerk zu ermöglichen.

Bei einer Verbindungsaufbausteuerung sowie einer allgemeine Handhabung einer Telekommunikationsverbindung - auch als 'Call Processing' bezeichnet - zwischen zwei VoIP-Kommunikationsendgeräten kommen Systemeinheiten zum Einsatz, die in der Fachwelt auch als Netzwerkeinheit bzw. 'Network Unit' bezeichnet werden.

Für eine Bestimmung des Leitwegs über das paketorientierte Netzwerk - auch 'Routing' genannt - werden sogenannte Gateways vorgesehen, die durch die Netzwerkeinheit gesteuert werden. Es existieren sowohl Gateways zur Leitwegbestimmung von Signalisierungsdaten enthaltenden Datenpaketen als auch Gateways zur Leitwegbestimmung von Nutzdaten enthaltenden Datenpaketen, insbesondere also Sprach-, Video- oder Fernkopiedaten. Derlei Gateways enthalten Mittel zur Umsetzung von Datenströmen in geeignete Datenpakete. Zur Umsetzung von Nutzdaten in digitale Informationen sind z.B. digitale Signalprozessoren vorgesehen.

Im folgenden wird im speziellen ein Aufbau einer Fernkopiedatenverbindung - Faxübertragung - z.B. gemäß des ITU-T-Standards T.30 über ein paketorientiertes Netzwerk betrachtet, bei der sich für den aktuellen Stand der Technik Probleme mit dem Aufbau und Initialisierung der Fernkopiedatenübertragung ergeben.

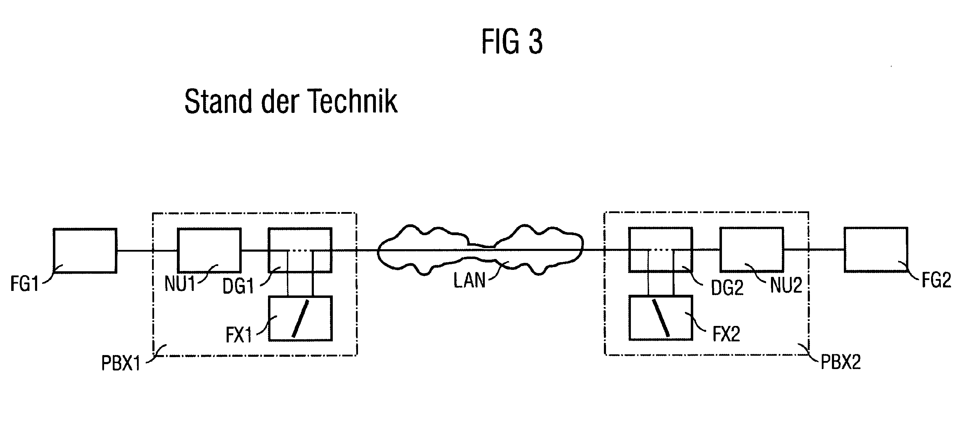

Der Stand der Technik wird zunächst anhand der Zeichnung, Fig. 3 dargestellt.

In Fig. 3 sind zwei über ein paketorientiertes Netzwerk LAN verbundene Kommunikationseinrichtungen PBX1; PBX2 dargestellt. An die erste Kommunikationseinrichtung PBX1 ist ein erstes Faxgerät FG1, an die zweite Kommunikationseinrichtung PBX2 ein zweites Faxgerät FG2 angeschlossen.

Die bildliche Bezeichnung 'Faxgerät' umfasst im übrigen auch Softwareapplikationen, die über eine einem Faxgerät gleichgeartete Weise mit einem jeweiligen Kommunikationssystem bzw. - partner kommunizieren.

In der ersten Kommunikationseinrichtung PBX1 sind mehrere Systemeinheiten angeordnet, von denen eine erste Netzwerkeinheit NU1, ein erstes Datengateway DG1 und eine erste Faxprotokolleinheit FX1 dargestellt sind. In entsprechender Weise sind in der zweiten Kommunikationseinrichtung PBX2 eine zweite Netzwerkeinheit NU2, ein zweites Datengateway DG2 und eine zweite Faxprotokolleinheit FX2 dargestellt.

Es wird im folgenden davon ausgegangen, dass durch das der ersten Kommunikationseinrichtung PBX1 zugeordnete erste Faxgerät FG1 ein ausgehender Verbindungswunsch zu einem der zweiten Kommunikationseinrichtung PBX2 zugeordneten zweiten Faxgerät FG2 auftritt. Die Fernkopiedaten sowie zugehörige Signalisierungs- und Steuerungsnachrichten werden dabei über das paketorientierte Netzwerk LAN zwischen den beiden Kommunikationseinrichtungen PBX1, PBX2 in Form von Datenpaketen übertragen.

Die für eine Verbindungsaufbausteuerung zuständige Netzwerkeinheit bzw. 'Network Unit' NU1 kommuniziert bei der Einleitung eines Verbindungsaufbaus mit dem ersten Datengateway DG1, um eine Freigabe von Ressourcen anzufordern. Sind diese Ressourcenfreigaben abgeschlossen, werden Nachrichten bzw.

Daten des Faxgeräts FG1 im wesentlichen von der Netzwerkeinheit NU1 an das erste Datengateway transparent durchgereicht. Dies gilt analog für die umgekehrte Richtung. Das erste Datengateway DG1 ist also als jeweiliger Endpunkt einer Kommunikationsbeziehung mit dem ersten Faxgeräts FG1 bzw. mit dem - im übrigen analog ausgestalteten - zweiten Datengateway DG2 zu sehen.

In einer ersten Phase wird ein Signalisierungskanal, in einer folgenden Phase ein Nutzdatenkanal zwischen dem ersten und zweiten Datengateway DG1, DG2 aufgebaut.

Unter Verwendung der ersten Faxprotokolleinheit FX1 werden vom ersten Datengateway mit dem ersten Faxgerät FG1 bzw. mit dem zweiten Datengateway DG2 in einem bestehenden Nutzdatenkanal Signale gemäß eines Faxprotokolls - z.B. des ITU-T-Standards T.30 - ausgetauscht. Für den Aufbau des Signalisierungskanals, des Nutzdatenkanals und schließlich für den Austausch von Bildinformationen der Faxübertragung werden die jeweiligen Faxprotokolleinheiten FX1, FX2 nicht benötigt. Am ersten bzw. zweiten Datengateway DG1, DG2 werden Daten in diesen Fällen ohne Weiterleitung an die jeweils zugeordnete Faxprotokolleinheit FX1, FX2 durchgereicht.

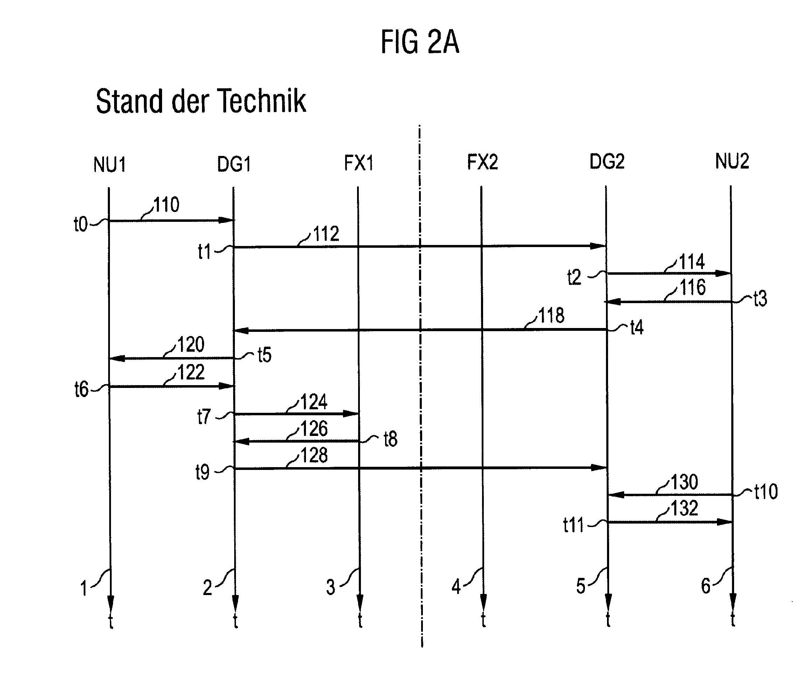

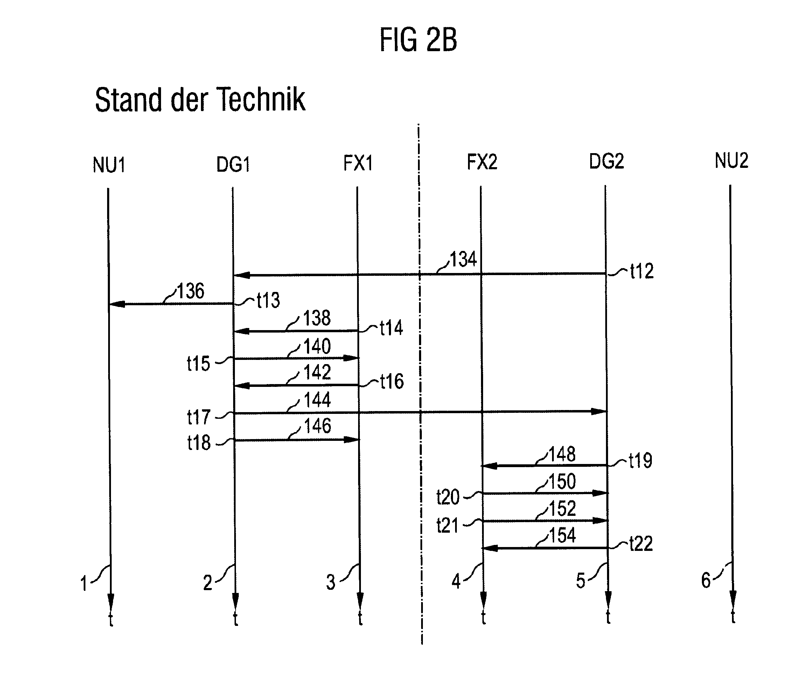

Der Stand der Technik wird im folgenden unter weiterer Bezugnahme auf die Systemeinheiten der Fig. 3 anhand von Fig. 2A sowie Fig. 2B dargestellt.

Die Figuren 2A und 2B zeigen einen Austausch von Steuerungsnachrichten zwischen den Systemeinheiten der ersten Kommunikationseinrichtung PBX1 über das paketorientierte Netzwerk LAN mit Systemeinheiten der zweiten Kommunikationseinrichtung PBX2. Es wird davon ausgegangen, dass durch das erste Faxgerät FG1 ein ausgehender Verbindungswunsch zu dem zweiten Faxgerät FG2 auftritt. Die Fernkopiedaten sowie zugehörige Signalisierungs- und Steuerungsnachrichten werden dabei über das paketorientierte Netzwerk LAN zwischen den beiden Kommu nikationseinrichtungen PBX1, PBX2 in Form von Datenpaketen übertragen.

Zwischen den Systemeinheiten ausgetauschte Steuerungsnachrichten, meist in Form von Anforderungsnachrichten ('Request') bzw. Bestätigungsnachrichten ('Confirm') werden dabei in Abhängigkeit bestimmter ausgeführter oder auszuführender Aktionen bzw. aufgetretener Ereignisse in den Systemeinheiten ausgelöst.

Eine in der Zeichnung strichpunktiert dargestellte Linie trennt jeweils die - in der Zeichnung links dargestellten - Systemeinheiten der ersten Kommunikationseinrichtung PBX1, d.h. der ersten Netzwerkeinrichtung NU1, dem ersten Datengateway DG1 sowie der ersten Faxprotokolleinheit FX1, von - in der Zeichnung rechts dargestellten - Systemeinheiten der zweiten Kommunikationseinrichtung PBX2, d.h. der zweiten Netzwerkeinrichtung NU2, dem zweiten Datengateway DG2 sowie der zweiten Faxprotokolleinheit FX2.

Zeitstrahlen 1,2,3,4,5,6 sind in dieser Reihenfolge der ersten Netzwerkeinheit NU1, dem ersten Datengateway DG1, der ersten Faxschnittstelle FX1, der zweiten Faxschnittstelle FX2, dem zweiten Datengateway DG2 sowie der zweiten Netzwerkeinheit NU2 zugeordnet. Die Zeitstrahlen 1,2,3,4,5,6 verlaufen von oben nach unten, so dass spätere Zeitpunkte weiter unten liegen als frühere Zeitpunkte.

Im folgenden werden Steuerungsnachrichten zusammen mit auftretenden Ereignissen oder Aktionen anhand der Zeichnung in chronologischer Reihenfolge erläutert.

Die erste Netzwerkeinheit NU1 erzeugt zum Zeitpunkt t0 aufgrund eines - vor dem Zeitpunkt t0 - eingetroffenen Verbindungswunsches des ersten Faxgeräts FG1 eine Anforderungsnachricht 110, die auch als 'GW_ALLOC_CHANNEL_REQ'-Nachricht ('Request') bezeichnet wird. Diese Nachricht 110 wird an das erste Datengateway DG1 übermittelt, um eine Bereitstellung von Ressourcen des ersten Datengateways DG1 für die einzurichtende Datenverbindung zum zweiten Faxgerät FG2 anzufordern.

Das erste Datengateway DG1 sendet daraufhin zum Zeitpunkt t1 eine Anforderungsnachricht 112 an das zweite Datengateway DG2, die auch als 'DGW_ALLOC_REQ'-Nachricht bezeichnet wird. Diese Anforderungsnachricht 112 dient einer Anforderung von Ressourcen des zweiten Datengateways DG2 für die einzurichtende Datenverbindung.

Zum Zeitpunkt t2 sendet das zweite Datengateway DG2 eine Hinweisnachricht 114, welche der steuernden zweiten Netzwerkeinheit NU2 eine erfolgreiche Bereitstellung von Ressourcen des zweiten Datengateways DG2 anzeigt und auch als 'NU_MSG_ALLOC_CHN_IND'-Nachricht ('Indication') bezeichnet wird. Die zweite Netzwerkeinheit NU2 initiiert nach Eingang dieser Nachricht einen - nicht dargestellten - 'SETUP'-Befehl an das zweite Faxgerät FG2. Ist das zweite Faxgerät FG2 nicht belegt, quittiert dieses mit einer - nicht dargestellten - 'ALERT'-Nachricht die im Zusammenhang mit einer Signalisierung bzw. Ruf eines Teilnehmers an die steuernde Netzwerkeinheit NU2 übergeben wird.

Die zweite Netzwerkeinheit NU2 erzeugt daraufhin zum Zeitpunkt t3 eine Anforderungsnachricht 116, die auch als 'ALLOC_CHN_REQ'-Nachricht bezeichnet wird. Diese Nachricht 116 wird an das zweite Datengateway DG2 übermittelt, um eine Bereitstellung von Ressourcen des zweiten Datengateways DG2 für die einzurichtende Datenverbindung zum ersten Faxgerät FG1 anzufordern.

Das zweite Datengateway DG2 sendet nach einer erfolgten Bereitstellung von Ressourcen zum Zeitpunkt t4 eine Bestätigungsnachricht 118 an das erste Datengateway DG1, die auch als 'DGW_ALLOC_CONF'-Nachricht ('Confirm') bezeichnet wird.

Diese Bestätigungsnachricht 118 dient einer Mitteilung an das erste Datengateway DG1 über eine ausgeführte Bereitstellung von Ressourcen des zweiten Datengateways DG2 in Antwort auf die Anforderungsnachricht 112.

Zum Zeitpunkt t5 sendet das erste Datengateway DG1 eine Bestätigungsnachricht 120 an die erste Netzwerkeinheit NU1 die auch als 'DG1 ALLOC_CONF' bezeichnet wird und die der ersten Netzwerkeinheit NU1 einer Bestätigung auf die Anforderungsnachricht 110 dient.

Zum Zeitpunkt t5 ist der Verbindungsaufbau auf der Ebene eines Signalisierungskanals zwischen den beiden Faxgeräten FG1, FG2 abgeschlossen. Auf der Ebene der Systemeinheiten d.h. der ersten Netzwerkeinrichtung NU1, dem ersten Datengateway DG1 der ersten Faxprotokolleinheit FX1 der zweiten Netzwerkeinrichtung NU2, dem zweiten Datengateway DG2 sowie der zweiten Faxprotokolleinheit FX2 erfolgt im folgenden der Aufbau einer Nutzdatenverbindung.

Die erste Netzwerkeinheit NU1 erzeugt zum Zeitpunkt t6 eine Anforderungsnachricht 122, die auch als
'GW_OPEN_CHANNEL_REQ'-Nachricht bezeichnet wird. Diese Nachricht 122 wird an das erste Datengateway DG1 übermittelt, um eine Öffnung eines Nutzdatenkanals durch das erste Datengateway DG1 anzufordern.

Das erste Datengateway DG1 erzeugt zum Zeitpunkt t7 eine Anforderungsnachricht 124, die auch als 'CONNECT_B3_REQ'-Nachricht 124 bezeichnet wird. Diese Nachricht 124 wird an die erste Faxprotokolleinheit FX1 übermittelt, um eine Öffnung eines Nutzdatenkanals für die anstehende Fernkopiedatenübertragung durch die erste Faxprotokolleinheit FX1 anzufordern.

Zum Zeitpunkt t8 sendet die erste Faxprotokolleinheit FX1 eine Bestätigungsnachricht 126 an das erste Datengateway DG1 die auch als 'CONNECT_B3_CONF' bezeichnet wird und die dem ersten Datengateway DG1 einer Bestätigung auf die Anforderungsnachricht 110 dient.

Die beiden zum Zeitpunkt t7 bzw. zum Zeitpunkt t8 gesendeten Nachrichten 124,126 erfolgen z.B. über Zwischenschaltung einer - nicht dargestellten - CAPI-Protokolleinheit (Common Application Programming Interface). Die bekannte Schnittstelle CAPI ist eine oberhalb der Vermittlungsschicht liegende Software- bzw. Kommunikationsschnittstelle, die Kommunikationsprotokolle für den Nutzdatenkanal zur Verfügung stellt. Im folgenden erläuterte Nachrichten zwischen dem ersten bzw. zweiten Datengateway DG1, DG2 und der ersten bzw. zweiten Faxprotokolleinheit FX1, FX2 erfolgen z.B. jeweils über diese CAPI-Schnittstelle, ohne dass in der weiteren Beschreibung auf diese Zwischenschicht hingewiesen wird.

Zum Zeitpunkt t9 sendet das erste Datengateway DG1 eine Bestätigungsnachricht 128 an das zweite Datengateway DG2, die auch als 'DGW_OPEN_CONF' bezeichnet wird und die dem zweiten Datengateway DG2 eine erfolgreiche Initialisierung zum Aufbau des Nutzdatenkanals meldet.

Mit dem Eingang einer vom zweiten Faxgerät FG2 an die zweite Netzwerkeinheit NU2 gesendeten - nicht dargestellten - 'CONNECT'-Nachricht, die anschaulich ein 'Abheben' des zweiten Faxgeräts FG2, d.h. eine Entgegennahme des durch das erste Faxgerät FG1 initiierten Verbindungswunsches meldet, ist eine Verbindung zwischen dem zweiten Faxgerät FG2 und der zweiten Netzwerkeinheit NU2 zu einem vor dem Zeitpunkt t10 liegenden - nicht dargestellten - Zeitpunkt aufgebaut. Gemäß des ITU-T Standards T.30 erfolgt nach einer definierbaren Zeitperiode auf dem zweiten Faxgerät FG2 ein Senden von sogenannten CED-Signalen (Called Terminal Identification). CED-Signale werden von einem nicht auf sprachlicher Basis arbeitenden Kommunikationsendgeräts auf dem Nutzdatenkanal gesendet um anzuzeigen, dass dieses gerufene Kommunikationsendge rät - hier: das zweite Faxgerät FG2 - sich im Übertragungsmodus befindet. Die Zeitperiode zwischen dem 'Abheben' des zweiten Faxgeräts FG2 und dem Senden der CED-Signale ist auf ca. sieben Sekunden eingestellt, da die folgenden Verfahrensschritte ungefähr diese Zeitperiode benötigen, bis das erste Faxgerät FG1 seinerseits in den Übertragungsmodus wechselt. Das Aussenden des CED-Signals erfolgt also nicht über eine synchronisierbare Weise unter Verwendung einer Steuernachricht.

Die zweite Netzwerkeinheit NU2 erzeugt zum Zeitpunkt t10 eine Anforderungsnachricht 130, die auch als
'GW_OPEN_CHANNEL_REQ'-Nachricht 130 bezeichnet wird. Diese Nachricht 130 wird an das zweite Datengateway DG2 übermittelt, um eine Initialisierung zum Aufbau des Nutzdatenkanals von Seiten des zweiten Datengateways DG2 anzufordern.

Das zweite Datengateway DG2 sendet für eine Initialisierung zum Aufbau des Nutzdatenkanals von Seiten des zweiten Datengateways DG2 eine - nicht dargestellte - Anforderungsnachricht an die - nicht dargestellte, dem zweiten Datengateway DG2 zugeordnete - CAPI-Protokolleinheit, um Ressourcen von dieser CAPI-Protokolleinheit anzufordern. Mit einer Freigabe von Ressourcen durch die CAPI-Protokolleinheit wird eine - nicht dargestellte - Bestätigungsnachricht von der CAPI-Protokolleinheit an das zweite Datengateway DG2 übermittelt.

Zu einem darauf folgenden Zeitpunkt t11 sendet das zweite Datengateway DG2 eine Bestätigungsnachricht 132 an die zweite Netzwerkeinheit NU2 die auch als 'NU_MSG_OPEN_CHN_CONF' bezeichnet wird und die der zweiten Netzwerkeinheit NU2 einer Bestätigung auf die Anforderungsnachricht 130 dient.

Zum Zeitpunkt t12 sendet das zweite Datengateway DG2 eine Bestätigungsnachricht 134 an das erste Datengateway DG1, die auch als 'DGW_OPEN_CONF' bezeichnet wird und die dem ersten Datengateway DG1 eine erfolgreiche Initialisierung zum Aufbau des Nutzdatenkanals meldet.

Zum Zeitpunkt t13 sendet das erste Datengateway DG1 eine Bestätigungsnachricht 136 an die erste Netzwerkeinheit NU1 die auch als 'NU_MSG_OPEN_CHN_CONF' bezeichnet wird und die der ersten Netzwerkeinheit NU1 einer Bestätigung auf die Anforderungsnachricht 122 dient.

Ab dem Zeitpunkt t13 ist der Nutzdatenkanal für die betrachtete Faxverbindung aufgebaut. Zu den im weiteren beschriebenen darauffolgenden Zeitpunkten t14, t15, t16 erfolgt ein Verbindungsaufbau zwischen den Faxgeräten FG1, FG2 auf der Ebene eines Nutzdatenaustauschs, bei dem vor der Übertragung der eigentlichen Bilddaten der auszuführenden Fernkopie eine Absprache zur Einleitung der Datenverbindung zwischen den Faxgeräten FG1, FG2 stattfindet. Das erste Faxgerät FG1 wechselt dabei in den Übertragungsmodus durch die Aussendung von sogenannten CNG-Signalen ('Calling Tone').

Die beiden Datengateways DG1, DG2 agieren nun ihrerseits als Faxgeräte, d.h. das erste Datengateway DG1 kommuniziert sowohl mit dem ersten Faxgerät FG1 als auch mit dem zweiten Datengateway DG2 auf der Ebene eines Faxprotokolls. Das zweite Datengateway DG2 kommuniziert wiederum in gleicher Weise mit dem zweiten Faxgerät FG2 sowie mit dem ersten Datengateway DG1. Auf diese Weise erfolgt zu einem späteren - nicht dargestellten - Zeitpunkt die Faxdatenübertragung vom ersten Faxgerät FG1 an das erste Datengateway DG1, von der über das paketorientierte Netzwerk LAN die Faxdaten an das zweite Datengateway DG2 und schließlich an das zweite Faxgerät FG2 übertragen werden. Die beiden Datengateways DG1, DG2 führen eine jeweilige Umwandlung zwischen kontinuierlichen Datenströmen und Datenpaketen durch.

Zum Zeitpunkt t14 sendet die erste Faxprotokolleinheit FX1 eine Hinweisnachricht 138 an das erste Datengateway DG1 die auch als 'CONNECT_ B3_IND' bezeichnet wird und die dem ersten Datengateway DG1 eine erfolgreiche Initialisierung der senderseitigen Absprache zur Einleitung der Datenverbindung anzeigt.

Das erste Datengateway DG1 erzeugt zum Zeitpunkt t15 eine Bestätigungsnachricht 140, die auch als 'CONNECT_B3_RESP'-Nachricht ('Response') bezeichnet wird. Diese Nachricht 140 wird an die erste Faxprotokolleinheit FX1 übermittelt.

Zum Zeitpunkt t16 sendet die erste Faxprotokolleinheit FX1 eine Hinweisnachricht 142 an das erste Datengateway DG1, die auch als 'CON_B3_ACT_IND'-Nachricht bezeichnet wird und die dem ersten Datengateway DG1 Identifikationsinformationen für die Absprache übermittelt. Diese - auch als TSI, Transmitting Subscriber Identification bekannte - Identifikationsinformationen umfassen beispielsweise eine das erste Faxgerät FG1 identifizierende Kennung bzw. Rufnummer ('Station ID') sowie Angaben zur Faxart usw.

Das erste Datengateway DG1 übergibt diese Identifikationsinformationen zum Zeitpunkt t17 in Form einer Hinweisnachricht 144 an das zweite Datengateway DG2, die auch als 'CONNECT_B3_ACT_IND'-Nachricht bezeichnet wird. Diese Hinweisnachricht 144 dient einer Übermittlung der Identifikationsinformationen an das zweite Datengateway DG2.

Nachdem die Identifikationsinformationen mit der Hinweisnachricht 144 an das zweite Datengateway DG2 gesendet wurden, erzeugt das erste Datengateway DG1 zum Zeitpunkt t18 eine Bestätigungsnachricht 146, die auch als 'CON_B3_ACT_RESP'-Nachricht bezeichnet wird. Diese Nachricht 146 wird an die erste Faxprotokolleinheit FX1 übermittelt, um den zum Zeitpunkt t16 erfolgten Eingang der Hinweisnachricht 142 zu quittieren.

Das zweite Datengateway DG2 erzeugt zum Zeitpunkt t19 eine Anforderungsnachricht 148, die auch als 'CONNECT_B3_REQ'-Nachricht 148 bezeichnet wird. Diese Nachricht 148 wird an die zweite Faxprotokolleinheit FX2 übermittelt, um eine Öffnung eines Nutzdatenkanals für die anstehende Fernkopiedatenübertragung durch die zweite Faxprotokolleinheit FX2 anzufordern.

Zum Zeitpunkt t20 sendet die zweite Faxprotokolleinheit FX2 eine Bestätigungsnachricht 150 an das zweite Datengateway DG2, die auch als 'CONNECT_B3_CONF' bezeichnet wird und die dem zweiten Datengateway DG2 einer Bestätigung auf die vorausgehende Anforderungsnachricht 148 dient.

Zum Zeitpunkt t21 sendet die zweite Faxprotokolleinheit FX2 eine Hinweisnachricht 152 an das zweite Datengateway DG2, die auch als 'CONNECT_B3_IND' bezeichnet wird und die dem zweiten Datengateway DG2 eine erfolgreiche Initialisierung der empfängerseitigen Absprache zur Einleitung der Datenverbindung anzeigt.

Das zweite Datengateway DG2 erzeugt zum Zeitpunkt t22 eine Bestätigungsnachricht 154, die auch als 'CONNECT_B3_RESP'-Nachricht ('Response') bezeichnet wird. Diese Nachricht 154 wird an die erste Faxprotokolleinheit FX1 übermittelt.

Dem Aufbau der Faxverbindung folgen auf der Ebene eines Nutzdatenaustausches zwischen den beiden Faxgeräten FG1, FG2 noch weitere Verfahrensschritte, wie z.B. eine Übertragung von Konfigurationsdaten und eine Trainingssequenz zur Verifizierung einer korrekten Datenübertragung zwischen Faxgeräten, bevor die eigentliche Übertragung der Bilddaten beginnt. Diese Verfahrensschritte werden nicht weiter betrachtet.

Das beschriebene Verfahrensablauf lässt sich wie folgt zusammenfassen: Nach einem zum Zeitpunkt t5 abgeschlossenen Aufbau der Verbindung auf einer Signalisierungsebene erfolgt ein "Abheben" des empfangenden zweiten Faxgeräts FG2. Erst wenn ein Verbindungsaufbau zwischen dem ersten Datengateway DG1 und dem ersten Faxgerät FG1 zum Zeitpunkt t16 vollständig abgeschlossen ist, wird in der zweiten Kommunikationseinrichtung PBX2 - durch ein Eintreffen der Hinweisnachricht 144 am zweiten Datengateway angestoßen - mit dem Aufbau der Verbindung zwischen dem zweiten Faxgerät FG2 und dem zweiten Datengateway DG2 begonnen. Das zweite Faxgerät FG2 hat zu diesem Zeitpunkt allerdings schon abgehoben und ein CED-Singal gesendet und ist gerade dabei, seine Konfigurationsdaten zu senden. Zu dem Zeitpunkt, an dem das - gemäß oben stehender Ausführungen als Faxgerät agierende - zweite Datengateway DG2 seine Initialisierungsdaten - das CNG-Signal sendet - kommt es folglich zu einer Überlagerung einer nach dem T.30-Standard erforderlichen Absprache des einzurichtenden Faxverbindungsaufbaus, da das Empfängerfax zu diesem Zeitpunkt bereits das CED-Signal gesendet hat und mit dem Senden seiner Konfigurationsdaten begonnen hat. Diese Überlagerung ist mit der erwähnten Verzögerung des CED-Signals nach dem Abheben um 7 Sekunden nicht zu verhindern, da der Zeitpunkt des Eintreffens der CNG-Nachricht nicht definiert festzulegen ist.

EP 1 185 072 A2 und US 2001/0030760 A1 offenbaren weitere Verfahren zur Einrichtung von Faxverbindungen über ein die Kommunikationseinrichtungen verbindendes paketorientiertes Netzwerk.

Aufgabe der Erfindung ist es, ein Verfahren anzugeben, bei dessen Anwendung die obigen Probleme vermieden werden.

Eine Lösung der Aufgabe erfolgt durch ein Verfahren mit den Merkmalen des Patentanspruchs 1.

Erfindungsgemäß erfolgt bei einer Einrichtung einer Faxverbindung zwischen einem rufenden ersten Faxgerät und einem gerufenen zweiten Faxgerät ein Faxverbindungsaufbau mit einem Aufbau einer übertragungssteuernden Verbindung zwischen einer zweiten Faxprotokolleinheit und einem zweiten Datengateway, bevor eine Übertragung von Identifikationsinformationen des sendenden ersten Faxgeräts FG1 enthaltenden Steuernachricht von einem ersten Datengateway an das zweite Datengateway erfolgt.

Ein wesentlicher Vorteil des erfindungsgemäßen Verfahrens ist darin zu sehen, dass eine Überlagerung von Initialisierungsdaten des sendenden ersten Faxgeräts mit Initialisierungsdaten des empfangenden zweiten Faxgeräts unterbunden wird.

In vorteilhafter Weise ergibt sich mit dem beschriebenen Verfahren ein wesentlich schnellerer Aufbau der Faxverbindung, da eine Implementierung einer Wartezeit an Systemeinheiten der empfangenden Kommunikationseinrichtung entfallen.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig. 1A bis 1B:: ein chronologisches Ablaufbild zur schematischen Darstellung von im Zusammenhang mit einer Einrichtung einer Faxübertragung ausgetauschten Steuernachrichten.

Fig. 1A zeigt einen mit Fig. 2A identischen Austausch von Steuernachrichten 110 ... 132 zwischen den Zeitpunkten t0 ... t11. Für eine Bedeutung der Steuernachrichten sowie des zeitlichen Ablaufs wird auf die Beschreibungseinleitung verwiesen.

In Fig 1B ist die aus dem Stand der Technik bekannte Bestätigungsnachricht 134 dargestellt, die dem ersten Datengateway DG1 eine erfolgreiche Initialisierung zum Aufbau des Nutzdatenkanals meldet.

Zum Zeitpunkt t13 sendet das erste Datengateway DG1 eine Bestätigungsnachricht 136 an die erste Netzwerkeinheit NU1, wel che der ersten Netzwerkeinheit NU1 einer Bestätigung auf die Anforderungsnachricht 122 dient.

Im folgenden wird das erfindungsgemäße Verfahren gemäß einer bevorzugten Ausführungsform anhand ausgetauschter Steuernachrichten erläutert.

Nachdem der Nutzdatenkanal für die betrachtete Faxverbindung zum Zeitpunkt t13 aufgebaut ist, erfolgt ein Verbindungsaufbau zwischen Datengateways DG1, DG2 auf der Ebene eines Nutzdatenaustauschs, bei dem vor der Übertragung der eigentlichen Bilddaten der auszuführenden Fernkopie eine Absprache zur Einleitung der Datenverbindung zwischen den Faxgeräten FG1, FG2 stattfindet. Im Unterschied zu Fig. 2B erfolgt, beginnend mit dem Zeitpunkt t14, eine Initialisierung der Absprache zur Einleitung der Datenverbindung sowohl senderseitig durch die Steuernachrichten t14, t15, als auch empfängerseitig - vgl. strichpunktierte Hervorhebung in der Zeichnung - durch die Steuernachrichten 148,150. Die vormals zu einem späteren Zeitpunkt übersandten Steuernachrichten 148,150 - vgl. Fig. 2B - werden statt dessen ungefähr zeitgleich mit den Steuerungsnachrichten 138, 140 ausgetauscht. Die ungefähre Zeitgleichheit wird in der Zeichnung aus Übersichtsgründen mit einer exakten Zeitgleichheit dargestellt, die Steuernachrichten sind daher zu den Zeitpunkten t14, t15 dargestellt.

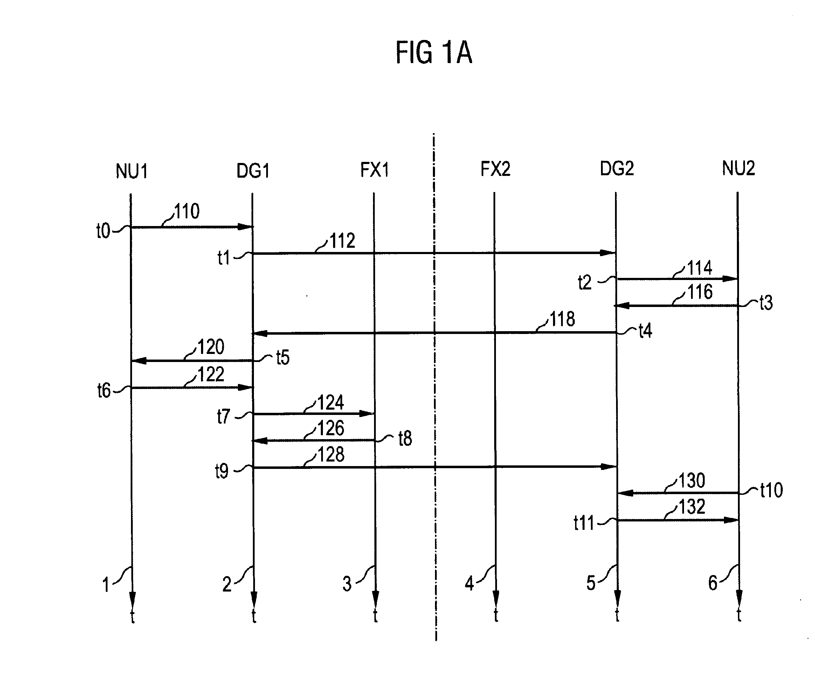

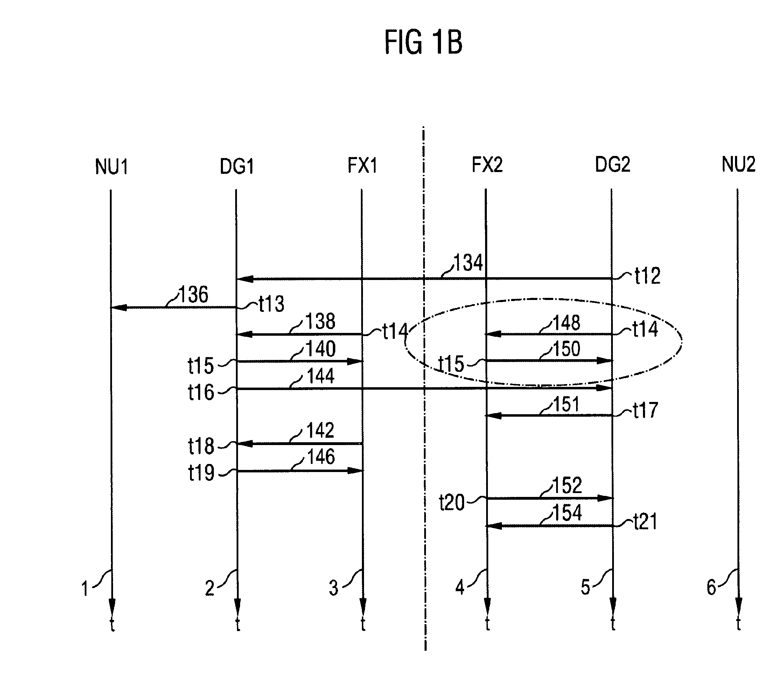

Im übrigen entspricht der Aufbau von Steuernachrichten der Fig. 2A bzw. 2B den jeweiligen Steuernachrichten mit identischen Bezugszeichen in den Fig. 1A bzw. 1B.

Das erste Datengateway DG1 übergibt zum Zeitpunkt t14 die vom ersten Faxgerät FG1 mit der Hinweisnachricht 138 erhaltenen Identifikationsinformationen zum Zeitpunkt t16 in Form der Hinweisnachricht 144 an das zweite Datengateway DG2. Diese Hinweisnachricht 144 dient einer Übermittlung der Identifikationsinformationen an das zweite Datengateway DG2.

Da zu diesem Zeitpunkt t16 die Initialisierungsphase zum Aufbau der Faxdatenverbindung - vgl. die vorgezogenen Steuernachrichten 148,150 - bereits abgeschlossen ist, ist eine neue Steuernachricht 151 notwendig, die auch als "API_TSI" bezeichnet wird. Diese Steuernachricht 151 übermittelt zum Zeitpunkt t17 die Identifikationsinformationen nachträglich, optional über die CAPI-Schnittstelle als Applikationsprogrammierschnittstelle (Application Programming Interface, API) an das zweite Faxgerät FG2 übertragen.

Zum Zeitpunkt t18 sendet die erste Faxprotokolleinheit FX1 die Hinweisnachricht 142 an das erste Datengateway DG1, die auch als 'CON_B3_ACT_IND'-Nachricht bezeichnet wird. Diese Nachricht enthält - im Unterschied zur Hinweisnachricht 142 gemäß dem Stand der Technik nach Fig. 2B - nicht notwendigerweise Identifikationsinformationen des ersten Faxgeräts FG1, die erfindungsgemäß bereits durch die Steuernachricht 138 von der ersten Faxprotokolleinheit FX1 an das erste Datengateway übermittelt wurden.

Das erste Datengateway DG1 erzeugt zum Zeitpunkt t19 die Bestätigungsnachricht 146. Diese Nachricht 146 wird an die erste Faxprotokolleinheit FX1 übermittelt, um den zum Zeitpunkt t18 erfolgten Eingang der Hinweisnachricht 142 zu quittieren.

Zum Zeitpunkt t20 sendet die zweite Faxprotokolleinheit FX2 die Hinweisnachricht 152 an das zweite Datengateway DG2, die dem zweiten Datengateway DG2 eine erfolgreiche Initialisierung der empfängerseitigen Absprache zur Einleitung der Datenverbindung anzeigt.

Das zweite Datengateway DG2 erzeugt zum Zeitpunkt t21 die Bestätigungsnachricht 154, die an die erste Faxprotokolleinheit FX1 übermittelt wird.

## Patentansprüche

1. Verfahren zur Einrichtung einer Faxverbindung zwischen einem von einer ersten Kommunikationseinrichtung (PBX1) gesteuerten rufenden ersten Faxgerät (FG1) und einem von einer zweiten Kommunikationseinrichtung (PBX2) gesteuerten gerufenen zweiten Faxgerät (FG2) über ein die Kommunikationseinrichtungen (PBX1,PBX2) verbindendes paketorientiertes Netzwerk (LAN), wobei
a) zuerst gesendete Daten des ersten bzw. zweiten Faxgeräts (FG1,FG2) an einem der ersten Kommunikationseinrichtung (PBX1) zugehörigen ersten Datengateway (DG1) bzw. einem der zweiten Kommunikationseinrichtung (PBX2) zugehörigen zweiten Datengateway (DG2) terminiert werden,
b) dann zwischen dem ersten und dem zweiten Datengateway (DG1,DG2) eine Nutzdatenverbindung aufgebaut wird,
c) dann zwischen dem ersten Faxgerät (FG1) und dem ersten Datengateway (DG1) eine übertragungssteuernde Verbindung aufgebaut wird und
d) zwischen dem zweiten Faxgerät (FG2) und dem zweiten Datengateway (DG2) eine übertragungssteuernde Verbindung aufgebaut wird,
e) wobei die übertragungssteuernde Verbindung zwischen dem zweiten Faxgerät (FG2) und dem zweiten Datengateway (DG2) zeitgleich mit der übertragungssteuernden Verbindung zwischen dem ersten Faxgerät (FG1) und dem ersten Datengateway (DG1) eingerichtet wird, und
f) dann Identifikationsinformationen des sendenden ersten Faxgeräts (FG1) vom ersten Datengateway (DG1) an das zweite Datengateway (DG2) übertragen werden.

2. Verfahren nach Anspruch 1,
**dadurch gekennzeichnet,**
**dass** die Identifikationsinformationen Einträge über die Art des Faxgeräts (FG1) enthalten.

3. Verfahren nach einem der vorhergehenden Ansprüche,
**dadurch gekennzeichnet,**
**dass** die Identifikationsinformationen Einträge über eine das Faxgerät (FG1) identifizierende Rufnummer und/oder Identifikationseinträge enthalten.

4. Verfahren nach einem der vorhergehenden Ansprüche,
**dadurch gekennzeichnet,**
**dass** das erste bzw. zweite Datengateway (DGl,DG2) jeweils eine Faxprotokolleinheit (FX1,FX2) zur Umsetzung von verbindungssteuernden Nutzdaten verwenden.

5. Verfahren nach Anspruch 4,
**dadurch gekennzeichnet,**
**dass** zwischen den Faxprotokolleinheiten (FX1,FX2) und Datengateways (DG1,DG2) ausgetauschte Steuernachrichten von einer zwischengeschalteten Applikationsschnittstelle empfangen und weitergereicht werden.

6. Verfahren nach Anspruch 5,
**dadurch gekennzeichnet,**
**dass** die Applikationsschnittstelle nach dem CAPI-Standard ausgestaltet ist.

## Claims

1. Method for establishing a fax connection between a calling first fax machine (FG1) controlled by a first communication device (PBX1) and a called second fax machine (FG2) controlled by a second communication device (PBX2) over a packet-oriented network (LAN) connecting the communication devices (PBX1, PBX2), wherein
a) firstly sent data of the first or second fax machine (FG1, FG2) are terminated at a first data gateway (DG1) associated with the first communication device (PBX1) or at a second data gateway (DG2) associated with the second communication device (PBX2),
b) then a useful data connection is set up between the first and the second data gateway (DG1, DG2),
c) then a transmission-controlling connection is set up between the first fax machine (FG1) and the first data gateway (DG1) and
d) a transmission-controlling connection is set up between the second fax machine (FG2) and the second data gateway (DG2),
e) wherein the transmission-controlling connection between the second fax machine (FG2) and the second data gateway (DG2) is established at the same time as the transmission-controlling connection between the first fax machine (FG1) and the first data gateway (DG1), and
f) then identification information of the sending first fax machine (FG1) is transmitted from the first data gateway (DG1) to the second data gateway (DG2).

2. Method according to claim 1, **characterised in that** the identification information contains entries regarding the type of fax machine (FG1).

3. Method according to any one of the preceding claims, **characterised in that** the identification information contains entries regarding a calling number, which identifies the fax machine (FG1), and/or identification entries.

4. Method according to any one of the preceding claims, **characterised in that** the first and/or second data gateways (DG1, DG2) each use a fax protocol unit (FX1, FX2) for converting connection-controlling useful data.

5. Method according to claim 4, **characterised in that** control messages exchanged between the fax protocol units (FX1, FX2) and data gateways (DG1, DG2) are received and passed on by an interposed application interface.

6. Method according to claim 5, **characterised in that** the application interface is configured according to the CAPI standard.

## Revendications

1. Procédé servant à établir une connexion par télécopie entre un premier appareil de télécopie (FG1) appelant commandé par un premier dispositif de communication (PBX1) et un deuxième appareil de télécopie (FG2) appelé commandé par un deuxième dispositif de communication (PBX2) par l'intermédiaire d'un réseau (LAN) à commutation par paquet connectant les dispositifs de communication (PBX1, PBX2), sachant que
a) dans un premier temps, l'envoi des données du premier ou du deuxième appareil de télécopie (FG1, FG2) à une première passerelle de données (DG1) associée au premier dispositif de communication (PBX1) ou à une deuxième passerelle de données (DG2) associée au deuxième dispositif de communication (PBX2) est limité dans le temps,
b) puis une connexion de données utiles est établie entre la première et la deuxième passerelle de données (DG1, DG2),
c) puis une connexion à transmission commandée est établie entre le premier appareil de télécopie (FG1) et la première passerelle de données (DG1) et
d) une connexion à transmission commandée est établie entre le deuxième appareil de télécopie (FG2) et la deuxième passerelle de données (DG2),
e) sachant que la connexion à transmission commandée entre le deuxième appareil de télécopie (FG2) et la deuxième passerelle de données (DG2) est établie en même temps que la connexion à transmission commandée entre le premier appareil de télécopie (FG1) et la première passerelle de données (DG1), et
f) puis des informations d'identification du premier appareil de télécopie (FG1) émetteur sont transmises par la première passerelle de données (DG1) à la deuxième passerelle de données (DG2).

2. Procédé selon la revendication 1,
**caractérisé en ce**
**que** les informations d'identification comprennent des données concernant le type de l'appareil de télécopie (FG1).

3. Procédé selon l'une quelconque des revendications précédentes,
**caractérisé en ce**
**que** les informations d'identification comprennent des données concernant un numéro d'appel identifiant l'appareil de télécopie (FG1) et/ou des données d'identification.

4. Procédé selon l'une quelconque des revendications précédentes,
**caractérisé en ce**
**que** la première ou la deuxième passerelle de données (DG1, DG) utilisent respectivement une unité de protocole de télécopie (FX1, FX2) servant à convertir des données utiles commandant la connexion.

5. Procédé selon la revendication 4,
**caractérisé en ce**
**que** des messages de commande échangés entre les unités de protocole de télécopie (FX1, FX2) et les passerelles de données (DG1, DG2) sont reçus par une interface d'application interconnectée et sont transmis.

6. Procédé selon la revendication 5,
**caractérisé en ce**
**que** l'interface d'application est configurée selon la norme CAPI.
